# EUROPÄISCHE PATENTSCHRIFT

(11) **EP 4 377 728 B1**
(45) Veröffentlichungstag und Bekanntmachung des Hinweises auf die Patenterteilung: **14.01.2026**
(21) Anmeldenummer: 22741286.3
(22) Anmeldetag: 11.07.2022
(51) Int. Cl.: G02B 5/18, G02B 27/01

(54) **PROJEKTIONSEINHEIT UND PROJEKTIONSVORRICHTUNG MIT EINER PROJEKTIONSEINHEIT**
PROJECTION UNIT, AND PROJECTION DEVICE HAVING A PROJECTION UNIT
UNITÉ DE PROJECTION ET DISPOSITIF DE PROJECTION COMPORTANT UNE UNITÉ DE PROJECTION

(30) Priorität: 30.07.2021 DE 102021119887
(43) Veröffentlichungstag der Anmeldung: 05.06.2024
(73) Patentinhaber: Carl Zeiss Jena GmbH, 07745 Jena (DE)
(72) Erfinder: THOMAE, Daniel, 07745 Jena (DE)
(74) Vertreter: Patentanwälte Geyer, Fehners & Partner mbB
(86) Internationale Anmeldenummer: PCT/EP2022/069256
(87) Internationale Veröffentlichungsnummer: WO 2023/006397

(56) Entgegenhaltungen:
- WO-A1-2011/121949
- WO-A1-2019/238881
- DE-A1- 102007 022 247
- DE-A1- 102018 218 404

## Beschreibung

Die vorliegende Erfindung betrifft eine Projektionseinheit mit den Merkmalen des Oberbegriffs des Anspruches 1 sowie eine Projektionsvorrichtung mit einer solchen Projektionseinheit.

Bei einer solchen Projektionseinheit kann ein Volumenhologramm zur Umlenkung des abzubildenden Bildes benutzt werden. Da die Umlenkeffizienz solcher Volumenhologramme in Abhängigkeit des Betrachtungswinkels für einen Benutzer für unterschiedliche Wellenlängen unterschiedlich ist, kann dies in nachteiliger Art und Weise dazu führen, dass das projizierte Bild zum Rand hin einen unerwünschten Farbstich aufweist, der einem Betrachter sehr schnell auffällt und sehr störend ist. In einer Projektionseinheit werden in der Regel drei Wellenlängen verwendet, wobei in der Regel jeweils eine Wellenlänge für blau, grün und rot vorgesehen ist. Es können jedoch auch nur zwei Wellenlängen verwendet werden.

Die DE 10 2018 218 404 A1 beschreibt eine Projektionseinheit der eingangs genannten Art. Die WO 2011/121949 A1 beschreibt eine Projektionseinheit mit Reliefgittern, die WO 2019/238881 A1 beschreibt ein Gerät zur Herstellung eines Hologramms und die DE 10 2007 022 247 A1 eine optische Umlenkeinheit zur Umlenkung von Lichtstrahlen zur Anzeige optischer Informationen in einem Blickfeld eines Fahrzeuginsassens.

Ausgehend hiervon ist es daher Aufgabe der Erfindung, eine Projektionseinheit bereitzustellen, bei der diese Schwierigkeit möglichst behoben ist. Ferner soll eine Projektionsvorrichtung mit einer solchen Projektionseinheit bereitgestellt werden.

Die Erfindung ist in den unabhängigen Ansprüchen definiert. Vorteilhafte Weiterbildungen sind in den abhängigen Ansprüchen angegeben.

Da die Umlenkeffizienzverläufe für den vorbestimmten Winkelbereich dadurch gleich eingestellt sind, dass bei den einbelichteten Volumengittern jeweils die Anzahl der einbelichteten Interferenzmaxima (entlang einer vorbestimmten Richtung) gleich sind und dass die einbelichtete Brechzahlmodulation für die entsprechende Wellenlänge bei den einbelichteten Volumengittern gleich ist (die bei der Einbelichtung des Volumengitters so erzeugt wird), werden in vorteilhafter Weise unerwünschte Farbstiche im virtuellen Bild vermieden.

Die gleiche Anzahl der einbelichteten Interferenzmaxima führt dazu, dass die Dicke bzw. Ausdehnung der Volumengitter (in Richtung der einbelichteten Interferenzmaxima und somit entlang der vorbestimmten Richtung) unterschiedlich ist. Das Verhältnis der entsprechenden Dicken der einbelichteten Volumengitter ist dabei bevorzugt so festgelegt, dass es dem Verhältnis der Wellenlängen, für die die Volumengitter ausgelegt sind, entspricht. Diese unterschiedlichen Dicken der einbelichteten Volumengitter können insbesondere mit hoher Genauigkeit dadurch erreicht werden, dass für jedes Volumengitter eine separate Schicht (mit der entsprechenden Dicke) vorgesehen ist, in der dann das entsprechende Volumengitter ausgebildet ist. In diesem Fall entspricht die vorbestimmte Richtung der Richtung, in der die Dicke der Schicht gemessen bzw. angegeben wird.

Dabei ist es möglich, die separaten Volumengitter jeweils in einer entsprechenden separaten Schicht auszubilden und danach die Schichten als Schichtstapel zu verbinden (beispielsweise Verkleben).

Sofern hier von einem einbelichteten Volumengitter die Rede ist, wird hierbei bevorzugt verstanden, dass das Volumengitter belichtet und gegebenenfalls entwickelt oder gebleicht ist, so dass dann ein stabiles einbelichtetes Volumengitter vorliegt.

Die Belichtung zur Erzeugung des einbelichteten Volumengitters kann beispielsweise so durchgeführt werden, dass eine Referenzwelle mit einer vorbestimmten Wellenlänge (z.B. 532 nm, 460 nm oder 640 nm) unter einem ersten Einfallswinkel (z.B. von 0°) auf eine Schicht (die ein fotosensitive volumenholographische Material aufweist oder aus diesem gebildet ist), in die das Volumengitter einbelichtet werden soll, gerichtet wird und dass eine Signalwelle mit der gleichen Wellenlänge unter einem zweiten Einfallswinkel (z.B. von 60°), der sich vom ersten Einfallswinkel unterscheidet, ebenfalls auf die Schicht gerichtet wird, wobei die Referenzwelle und die Signalwelle vom selben Laser stammen, so dass ein Interferenzfeld bzw. Interferenzvolumen mit der gewünschten Anzahl von Interferenzmaxima über das fotosensitive volumenholographische Material der Schicht entsteht und somit die gewünschte Brechzahlmodulation ausgebildet wird. An den Interferenzmaxima ist die erzeugte Brechzahländerung maximal, so dass die Interferenzmaxima die Brechzahlmodulation festlegen.

Als fotosensitive volumenholographische Materialen können beispielsweise fotosensitive Gläser, Dichromat-Gelatinen oder Fotopolymere verwendet werden. Diese können z. B. auf eine PC-Folie (Polycarbonat-Folie) aufgebracht und dort entsprechend belichtet werden.

Unter der Brechzahlmodulation wird hier insbesondere der Betrag der maximalen Brechzahländerung bzw. -variation verstanden.

Ferner ist es möglich, dass bereits ein Schichtstapel mit Schichten für jedes Volumengitter vorgesehen ist. Dieser Schichtstapel kann Trennschichten aufweisen. Es ist jedoch auch möglich, dass der Schichtstapel keine Trennschichten aufweist.

In diesem Schichtstapel können dann die gewünschten Volumengitter einbelichtet werden.

Es ist jedoch auch möglich, eine Schicht mit unterschiedlichen Farbrezeptoren für die gewünschten Wellenlängen vorzusehen und die Belichtung durchzuführen, um somit die gewünschten Volumengitter herzustellen. In diesem Fall kann ein sogenanntes Multiplexing vorliegen. Es ist jedoch auch möglich, dass die Farbrezeptoren in separaten Teilschichtbereichen in der vorgesehenen Schicht sind, so dass wiederum ein Stapel von einbelichteten Volumengittern vorliegt.

Die einbelichteten Volumengitter sind identisch, wenn man jedes Volumengitter auf seine Anwendungswellenlänge skaliert.

Die Volumengitter können reflektive oder transmissive Gitter sein. Ebenso können die Volumengitter im Falle eines Bildleiters (engl. Waveguides) auch Edge-Lit-Gitter sein.

Das Volumenhologramm kann in einem transparenten Träger eingebettet sein. Es ist jedoch auch möglich, dass das Volumenhologramm in der Grenzfläche des transparenten Trägers ausgebildet ist.

Der transparente Träger kann auch als Bildleiter genutzt werden, der einen vom Volumenhologramm beabstandeten Einkoppelbereich aufweist, über den das mehrfarbige Bild in den Bildleiter eingekoppelt wird. Im Bildleiter kann die Führung des mehrfarbigen Bildes durch Reflexionen bis zum Volumenhologramm erfolgen. Das Volumenhologramm koppelt das geführte Licht dann zum Betrachter aus.

Der transparente Träger kann beispielsweise eine Windschutzscheibe oder eine sonstige Scheibe eines Fahrzeugs sein. Es kann sich aber auch um eine planparallele Platte handeln. Ferner ist es möglich, dass der transparente Träger gekrümmte Grenzflächen aufweist. Der transparente Träger des Volumenhologramms kann auch Teil eines Optiksystems sein, welches z.B. im Armaturenbrett eines Fahrzeugs angeordnet ist und von dort das Licht über die Reflexion an der Frontscheibe zum Betrachter lenkt.

Der transparente Träger kann aus Glas oder aus Kunststoff hergestellt sein.

Insbesondere kann die Projektionseinheit so ausgebildet sein, dass das virtuelle Bild in Überlagerung mit der Umgebung wahrnehmbar ist. Dazu ist das Volumenhologramm bevorzugt auch für die erste und zweite Wellenlänge transmissiv.

Bei dem vorbestimmten Winkelbereich kann es sich um einen Winkelbereich von 2°, 3°, 4°, 5°, 6°, 7°, 8°, 9°, 10°, 11°, 12°, 13°, 14°, 15°, 16°, 17°, 18°, 19° oder 20° Der vorbestimmte Winkelbereich kann in horizontaler und vertikaler Richtung unterschiedlich sein. So kann z.B. der horizontale Winkel 14° - 20° und der vertikale Winkel 5° -7,5° betragen. Der vorbestimmte Betrachtungswinkel kann in der Mitte des vorbestimmten Winkelbereiches liegen. Er kann jedoch auch außerhalb der Mitte des vorbestimmten Winkelbereiches liegen.

Unter einem konstanten Effizienzverhältnis für den vorbestimmten Winkelbereich wird hier insbesondere verstanden, dass das Effizienzverhältnis für den vorbestimmten Winkelbereich sich zwischen den Wellenlängen (bevorzugt bezogen auf den Maximalwert des Effizienzverhältnisses im vorbestimmten Winkelbereich) um nicht mehr als 1%, 2%, 3%, 4%, 5%, 6%, 7%, 8%, 9%, 10%, 11%, 12%, 13%, 14%, 15%, 16% oder 17% ändert.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine schematische Ansicht einer ersten Ausführungsform der erfindungsgemäßen holographischen Projektionsvorrichtung 1 ;
- Fig. 2: eine vergrößerte Detaildarstellung der Projektionsvorrichtung 1 von Fig. 1 ;
- Fig. 3: eine Darstellung der Umlenkeffizienz bekannter Volumengitter für drei unterschiedliche Wellenlängen;
- Fig. 4: eine Darstellung der Umlenkeffizienzen für erfindungsgemäße Volumengitter für die Wellenlängen von Fig. 3;
- Fig. 5: eine weitere Ausführungsform der erfindungsgemäßen holographischen Projektionsvorrichtung 1;
- Fig. 6: eine weitere Ausführungsform der erfindungsgemäßen holographischen Projektionsvorrichtung 1;
- Fig. 7: eine weitere Ausführungsform der erfindungsgemäßen holographischen Projektionsvorrichtung 1, und
- Fig. 8: eine Teilschnittansicht der Projektionsvorrichtung 1 von Fig. 7.

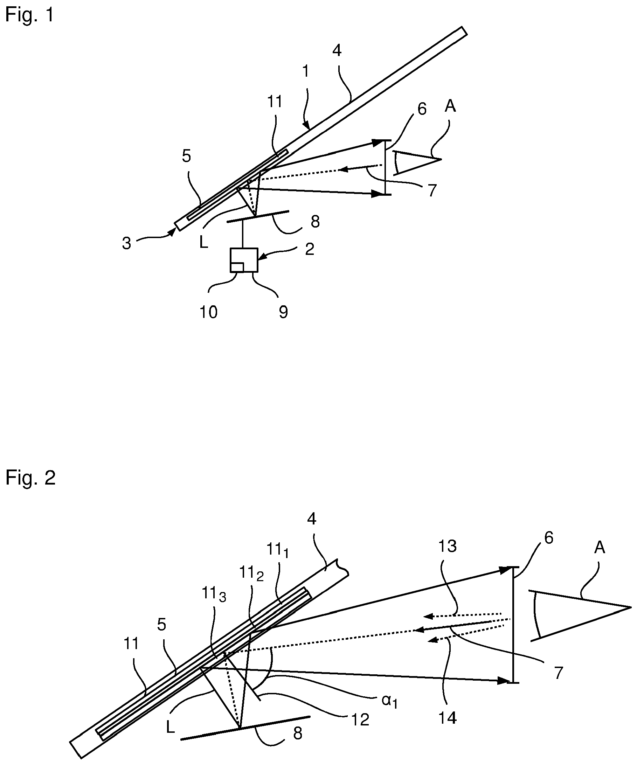

Bei der in Fig. 1 gezeigten Ausführungsform umfasst die erfindungsgemäße holographische Projektionsvorrichtung 1 ein Bildmodul 2 zur Erzeugung eines mehrfarbigen Bildes sowie eine erfindungsgemäße Projektionseinheit 3. Die Projektionseinheit 3 umfasst hier einen in eine Windschutzscheibe 4 eines Fahrzeugs integrierten holographischen Strahlteiler 5, an dem das mehrfarbige Bild (stellvertretend ist der Strahlengang eines Lichtbündels L eingezeichnet) in Richtung zu einer Austrittspupille 6 der Projektionseinheit 3 so umgelenkt wird, dass ein Benutzer, der sein Auge A in der Austrittspupille 6 positioniert, das mehrfarbige Bild als virtuelles Bild wahrnehmen kann, wenn er entlang einer vorbestimmten Blickrichtung 7 auf die Projektionseinheit 3 (bzw. hier auf den holographischen Strahlteiler 5) blickt.

Das Bildmodul 2 kann einen Bildgeber 8 sowie eine Steuereinheit 9 mit einem Prozessor 10 umfassen, wobei die Steuereinheit 9 den Bildgeber 8 zur Erzeugung des mehrfarbigen Bildes ansteuert. Bei dem Bildgeber 8 kann es sich um ein LCD-Modul, ein OLED-Modul oder ein LCoS-Modul oder um eine Kippspiegelmatrix handeln. Ferner kann der Bildgeber eine Mattscheibe aufweisen, die hier nicht eingezeichnet ist. Ebenso kann das System eine nicht direkt dem Bildgeber zugeordnete Lichtquelle, wie z.B. Laser, zur Beleuchtung des Bildgebers aufweisen, welche nicht eingezeichnet ist.

Das mehrfarbige Bild wird mittels des Bildgebers 8 dadurch erzeugt, dass beispielsweise drei Farbteilbilder mit unterschiedlichen Wellenlängen erzeugt werden. Dabei kann es sich z.B. um ein blaues Farbteilbild mit einer Wellenlänge von 460 nm, ein grünes Farbteilbild mit einer Wellenlänge von 532 nm und ein rotes Farbteilbild mit einer Wellenlänge von 640 nm handeln. Die Farbteilbilder können gleichzeitig oder alternierend zeitlich so schnell hintereinander erzeugt werden, dass für einen Benutzer nur die Überlagerung als mehrfarbiges Bild wahrnehmbar ist.

Der holographische Strahlteiler 5 weist, wie insbesondere in der vergrößerten Teilansicht von Fig. 2 ersichtlich ist, einen Schichtstapel 11 mit drei aufeinander gestapelten Fotopolymerschichten 11₁, 11₂ und 11₃ auf, wobei für jede der drei Wellenlängen jeweils ein volumenholographisches Gitter in eine der Fotopolymerschichten 11₁-11₃ geschrieben ist. Jedes der drei volumenholographischen Gitter ist so ausgebildet, dass es für eine der drei genannten Wellenlängen (beispielsweise mit einer Bandbreite von ± 3 % der Zentralwellenlänge) reflektiv ist und die restlichen Wellenlängen transmittiert. Die Reflexion ist dabei als Beugung an der Gitterstruktur des Volumenhologramms zu verstehen. Dabei wird die Reflektivität der einzelnen volumenholographischen Gitter, was der Beugungseffizienz entspricht, wie nachfolgend noch im Detail beschrieben wird, so eingestellt, dass eine effektive Reflektivität von maximal ca. 53% vorliegt. Dies ist hauptsächlich darin begründet, dass für den geschilderten Verwendungszweck in der Windschutzscheibe 4 des Fahrzeuges Reflektivitäten von 100% aus Sicherheitsgründen nicht zulässig sind. Für andere Anwendungen, bei denen solche Sicherheitsaspekte keine Rolle spielen, können die volumenholographischen Gitter sehr wohl so ausgelegt sein, dass sie eine maximale Reflektivität von größer als 53% aufweisen.

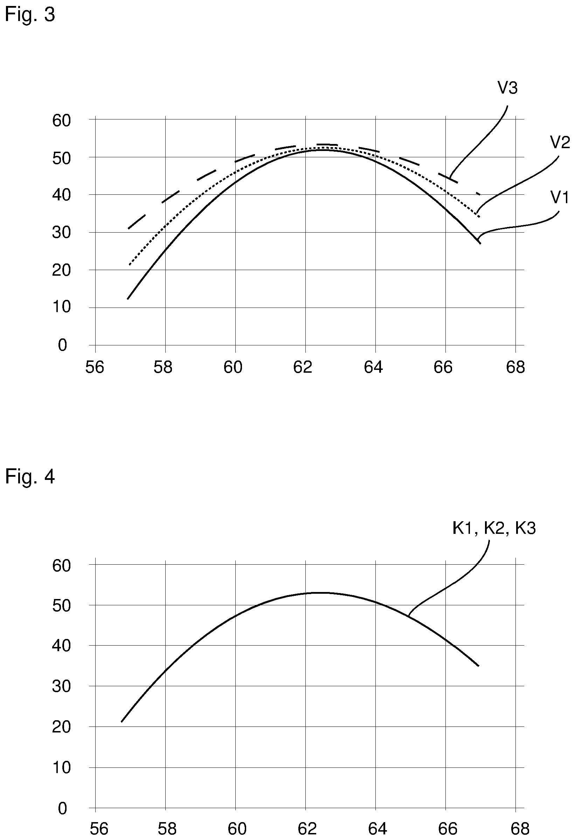

Der holographische Strahlteiler 5 ist für die vorbestimmte Betrachtungsrichtung 7 mit einem vorbestimmten Betrachtungswinkel α₁ von 62,5° (bezogen auf die Normale 12, an der Stelle, wo die Normale 12 die Windschutzscheibe 4 schneidet) ausgelegt. Jedoch können auch davon abweichende Betrachtungsrichtungen 13 und 14 auftreten. Wenn man wie bei herkömmlichen holographischen Strahlteiler Fotopolymerschichten gleicher Dicke verwenden würde, die für 62,5° ausgelegt sind, treten bei den abweichenden Betrachtungsrichtungen unterschiedliche Reflektivitäten auf, da für jedes der volumenholographischen Gitter ein vom Betrachtungswinkel abhängiger Reflexionseffizienzverlauf vorliegt, der für die einzelnen volumenholographischen Gitter unterschiedlich ist. Diese Reflektivitäten in Abhängigkeit des Betrachtungswinkels α sind in Fig. 3 gezeigt, wobei entlang der Abszisse der Betrachtungswinkel in Grad und entlang der Ordinate die Beugungseffizienz und somit die Reflektivität in Prozent aufgetragen sind.

Die Kurve V1 zeigt die Beugungseffizienz des Gitters für 460 nm, die Kurve V2 zeigt die Beugungseffizienz für die Wellenlänge 532 nm und die Kurve V3 zeigt die Beugungseffizienz für die Wellenlänge 640 nm. Jeder der Kurven V1-V3 hat ihr Maximum bei dem vorbestimmten Betrachtungswinkel α₁ von 62,5° und fällt dann mit größer oder kleiner werdendem Betrachtungswinkel in der Beugungseffizienz ab, so dass die in Fig. 3 gezeigten Beugungseffizienzverläufe vorliegen. Dieses in Fig. 3 gezeigte Verhalten würde dazu führen, dass beispielsweise das wahrnehmbare virtuelle Bild mit größer werdender Winkelabweichung vom vorbestimmten Betrachtungswinkel einen zunehmenden Rotstich aufweist. Bei großen Austrittspupillen 6, wie sie in den Fig. 1 und 2 gezeigt sind, liegen diese unterschiedlichen Betrachtungswinkel für den Benutzer schon für unterschiedliche Positionen im virtuellen Bild vor. So ist der vorbestimmte Betrachtungswinkel nur bei Betrachtung der Bildmitte erfüllt. Am Bildrand kann schon die Blickrichtung 13 oder 14 vorliegen, so dass das einzelne wahrgenommene virtuelle Bild abseits der Bildmitte schon einen Rotstich aufweisen würde.

Die Blickrichtungen 13 und 14 definieren somit einen vorbestimmten Winkelbereich um die vorbestimmte Betrachtungsrichtung 7, für den mindestens eine farbechte Projektion des virtuellen Bildes in die Austrittspupille 6 vorliegen sollte. Dabei kann es sich z.B. um einen Bereich von ± 2° bezogen auf den vorbestimmten Betrachtungswinkel α₁ handeln.

Um nun zu einer farbechten Projektion zu kommen, bei der z.B. kein Rotstich wahrnehmbar ist, werden die winkelabhängigen Umlenkeffizienzverläufe der einzelnen volumenholographischen Gitter so ausgelegt und hergestellt, dass sie für die jeweiligen Wellenlängen gleich sind. Dies wird dadurch erreicht, dass die einbelichteten Volumengitter in den Fotopolymerschichten 11₁ - 11₃ jeweils die gleiche Anzahl von einbelichteten Interferenzmaxima aufweisen und dass die einbelichtete Brechzahlmodulation für die entsprechende Wellenlänge bei den einbelichteten Volumengittern gleich ist. Dies führt dann dazu, dass die einzelnen Fotopolymerschichten 11₁ - 11₃ unterschiedliche Dicken aufweisen, wie in Fig. 2 schematisch und nicht maßstabsgetreu dargestellt ist. Wesentlich ist natürlich die Dicke der einbelichteten Volumengitter. Diese Dicke lässt sich am einfachsten über die Dicke der Fotopolymerschichten 11₁ - 11₃ mit der notwendigen Genauigkeit festlegen.

Da, unter Vernachlässigung der Brechzahldispersion des Fotopolymers, der Abstand von Interferenzmaxima linear von der Wellenlänge abhängt, ergibt sich, dass die Schichtdicken der Fotopolymerschichten 11₁ - 11₃ dem Verhältnis der entsprechenden Wellenlängen entsprechen. Der Brechzahlunterschied typischer Fotopolymere zwischen blau und rot ist hinreichend klein, dass er zunächst vernachlässigt werden kann. Daher werden hier die Fotopolymerschichten 11₁ - 11₃ mit den entsprechenden Dicken eingesetzt.

Die Reflektivitäten der so gebildeten volumenholographischen Gitter in den drei Fotopolymerschichten 11₁ - 11₃ in Abhängigkeit des Betrachtungswinkels α sind in Fig. 4 in gleicher Weise wie in Fig. 3 dargestellt, wobei die Kurven K1, K2 und K3 so genau übereinanderliegen, dass sie nicht zu unterscheiden sind. Dabei zeigt die Kurve K1 die Beugungseffizienz des Gitters für 460 nm, zeigt die Kurve K2 die Beugungseffizienz für die Wellenlänge 532 nm und zeigt die Kurve K3 die Beugungseffizienz für die Wellenlänge 640 nm. Die Brechzahlmodulation beträgt jeweils 0,014 und die Schichtdicke der Fotopolymerschicht 11₁ für die Wellenlänge 460 nm beträgt 8,65 µm, die Schichtdicke der Fotopolymerschicht 11₂ für die Wellenlänge 532 nm beträgt 10 µm und die Schichtdicke der Fotopolymerschicht 11₃ für die Wellenlänge 640 nm beträgt 12,03 µm. Die Brechzahl der Fotopolymerschichten 11₁ - 11₃ beträgt hier zur Vereinfachung 1,5.

Die drei Fotopolymerschichten 11₁ - 11₃ des holographischen Strahlteilers 5 können beispielsweise so hergestellt werden, dass die drei Fotopolymerschichten 11₁ - 11₃ getrennt belichtet werden, so dass in jede der drei Schichten 11₁ - 11₃ das gewünschte Volumengitter einbelichtet werden kann. Die einzelnen Schichten werden dann miteinander verklebt, um den Schichtstapel 11 zu bilden, der dann in die Windschutzscheibe eingebettet wird.

Es ist jedoch auch möglich, dass ein fertiges Dreischicht-Substrat mit den Fotopolymerschichten 11₁ - 11₃ vorgesehen ist, in die die drei Volumengitter einbelichtet werden. Dazu werden Fotopolymerschichten 11₁ - 11₃ verwendet, die für die einzelnen Wellenlängen möglichst selektiv sind. Der so hergestellte Schichtstapel wird dann in die Windschutzscheibe 4 eingebettet.

Ferner kann auch eine Schicht bereitgestellt werden, in welcher Farbrezeptoren für die genannten Wellenlängen (z.B. für rot, grün und blau) nur in unterschiedlichen Schichtdicken vorliegen. Durch die entsprechende Belichtung können dann die gewünschten unterschiedlichen Volumengitter einbelichtet werden. Diese Schicht mit den Volumengittern wird dann in die Windschutzscheibe eingebettet.

Wie Fig. 4 ferner entnommen werden kann, beträgt die maximale Reflektivität für den vorbestimmten Betrachtungswinkel α₁ ca. 53 %, so dass die Transmission mindestens 47 % beträgt.

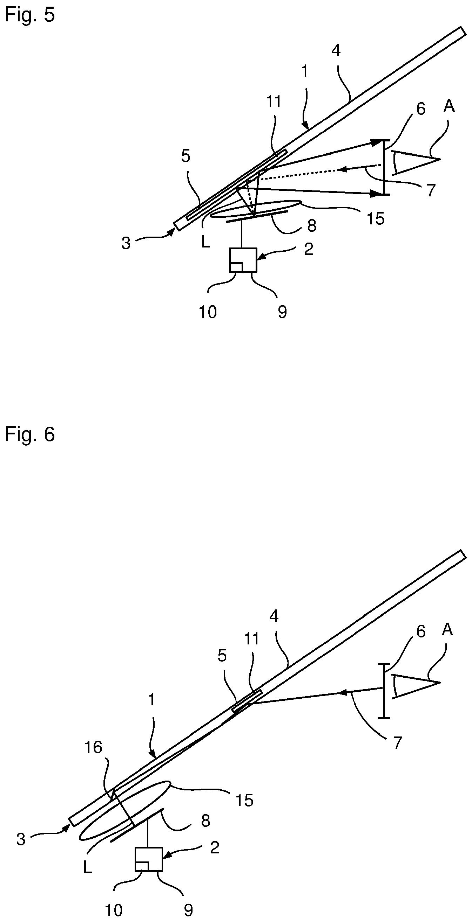

Natürlich ist es möglich, dass die erfindungsgemäße Projektionsvorrichtung 1 noch weitere optische Elemente beispielsweise zur Aberrationsminimierung aufweist. So können Spiegel und Linsen verwendet werden. Wie in Fig. 5 schematisch dargestellt ist, kann beispielsweise zwischen dem Bildgeber 8 und dem holographischen Strahlteiler 5 eine Optik 15 aus mehreren optisch wirksamen Flächen angeordnet sein, die hier schematisch als Linse eingezeichnet ist. Diese Optik 15 ist zur Korrektur von optischen Aberrationen, wie der dynamischen Verzeichnung, nötig, welche im gezeichneten System von Fig. 1 bei der Abbildung des Bildgebers 8 über das Volumenhologramm 5 als einzig wirksamer Fläche unweigerlich auftreten. Dabei kann das Volumenhologramm 5 auch in das Optiksystem 15 verlegt werden, so dass an der Windschutzscheibe 4 der herkömmliche Fresnelreflex zur Einspiegelung des Bildes in das Sichtfeld des Fahrers genutzt wird. Wird das Volumenhologramm in das Optiksystem 15 verlegt, kann die Beugungseffizienz des Volumenhologramms größer als 53 % sein.

Ferner ist in Fig. 6 eine Abwandlung gezeigt, bei der das Licht des Bildgebers 8 über ein Einkoppelelement 16 (beispielsweise Umlenkspiegel) in die Windschutzscheibe 4 eingekoppelt wird und in dieser durch mindestens eine Reflexion bis zum Fotopolymerschichtstapel 11 geführt wird, der die beschriebene Auskopplung durchführt.

Statt der Windschutzscheibe 4 kann auch jeder andere transparente Körper für die erfindungsgemäße Projektionsvorrichtung 1 verwendet werden. Dieser transparente Körper kann als planparallele Platte ausgebildet sein. Es ist jedoch auch möglich, dass mindestens eine Grenzfläche (beispielsweise Vorder- und/oder Rückseite) gekrümmt ausgebildet ist.

Der Fotopolymerschichtstapel 11 kann in dem transparenten Körper, wie mit der Windschutzscheibe in Fig. 1, 2, 5 und 6 gezeigt, eingebettet sein. Es ist jedoch auch möglich, dass die Fotopolymerschicht auf der Vorderseite oder Rückseite des transparenten Körpers ausgebildet ist. Ferner kann noch eine Deckschicht auf dem Fotopolymerschichtstapel 11 vorgesehen sein.

Die erfindungsgemäße Projektionsvorrichtung 1 kann auch als auf den Kopf des Benutzers aufsetzbar ausgebildet sein und dazu eine auf den Kopf des Benutzers aufsetzbare Haltevorrichtung 32 aufweisen, die z.B. in Art eines herkömmlichen Brillengestells ausgebildet sein kann. In diesem Fall kann die Projektionsvorrichtung 1 ein erstes und ein zweites Brillenglas 33, 34, die an der Haltevorrichtung 32 befestigt sind, aufweisen. Die Haltevorrichtung 32 mit den Brillengläsern 33, 34 kann z.B. als Sportbrille, Sonnenbrille und/oder Brille zur Korrektur einer Fehlsichtigkeit ausgebildet sein, wobei dem Benutzer über das erste Brillenglas 33 das virtuelle Bild in sein Gesichtsfeld eingespiegelt werden kann.

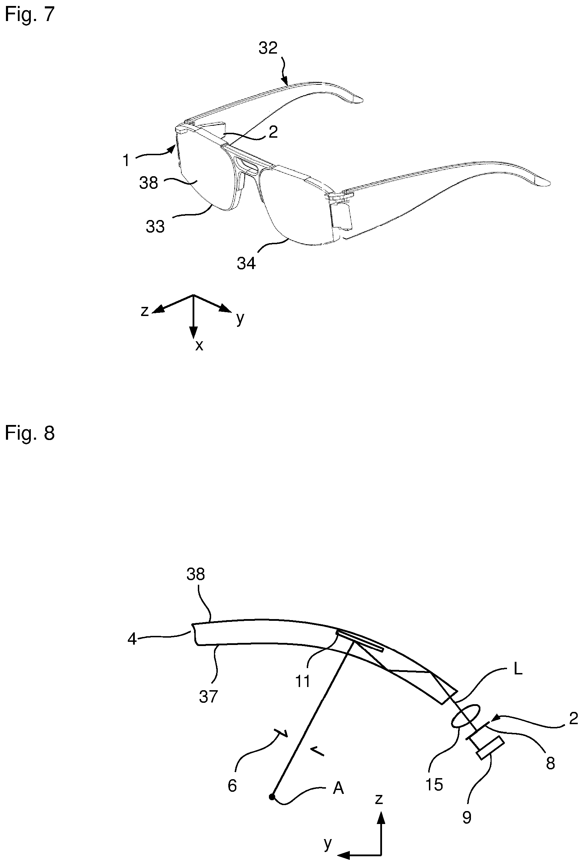

Das Bildmodul 2 kann im Bereich des rechten Brillenbügels der Haltevorrichtung 32 angeordnet sein, wie in Fig. 7 schematisch dargestellt ist.

Wie am besten aus der vergrößerten, schematischen Teilschnittansicht in Fig. 8 ersichtlich ist, weist das erste Brillenglas 33 eine Rückseite 37 und eine Vorderseite 38 auf. Die Rückseite 37 und die Vorderseite 38 sind hier gekrümmt. Es ist jedoch auch möglich, dass sie plan sind. Bei der Krümmung kann es sich um eine sphärische Krümmung oder eine asphärische Krümmung handeln.

Falls das virtuelle Bild in Überlagerung mit der Umgebung sichtbar sein soll, kann wiederum eine effektive Umlenkeffizienz im Bereich von beispielsweise 50% vorliegen. Falls die Umgebung nicht sichtbar sein soll, kann die Umlenkeffizienz größer gewählt werden.

## Patentansprüche

1. Projektionseinheit (3), die ein zugeführtes mehrfarbiges Bild mit einer ersten und einer zweiten Wellenlänge so in eine Austrittspupille (6) abbildet, dass es ein Betrachter als virtuelles Bild wahrnehmen kann, wenn sein Auge (A) in der Austrittspupille (6) positioniert ist und er unter einem vorbestimmten Betrachtungswinkel (α₁) auf die Projektionseinheit (3) blickt,
wobei die Projektionseinheit (3) ein Volumenhologramm aufweist, das das mehrfarbige Bild zur Abbildung in die Austrittspupille (6) umlenkt,
**dadurch gekennzeichnet, dass**
das Volumenhologramm für jede Wellenlänge der Farbteilbilder ein einbelichtetes Volumengitter aufweist, das jeweils eine vom Betrachtungswinkel abhängigen Umlenkeffizienzverlauf aufweist, der für den vorbestimmten Betrachtungswinkel (α₁) maximal ist, und
das die Umlenkeffizienzverläufe für einen vorbestimmten Winkelbereich um den vorbestimmten Betrachtungswinkel (α₁) dadurch gleich eingestellt sind,
dass bei den einbelichteten Volumengittern jeweils die Anzahl der einbelichteten Interferenzmaxima gleich sind und
dass die einbelichtete Brechzahlmodulation für die entsprechende Wellenlänge bei den einbelichteten Volumengittern gleich ist.

2. Projektionseinheit nach Anspruch 1,
wobei jedes Volumengitter in einer separaten Schicht (11) gebildet ist.

3. Projektionseinheit nach Anspruch 2, wobei die Dicke der Schichten so gewählt ist, dass das Verhältnis der Schichtdicken dem Verhältnis der Wellenlängen, für die die Volumengitter ausgelegt sind, entspricht.

4. Projektionseinheit nach einem der obigen Ansprüche, wobei
die Volumengitter als reflektive Volumengitter ausgebildet sind.

5. Projektionseinheit nach einem der obigen Ansprüche, wobei
das Volumenhologramm in einem transparenten Träger (4) eingebettet ist.

6. Projektionseinheit nach einem der obigen Ansprüche, wobei
die Projektionseinheit einen Bildleiter (4) aufweist, in den das mehrfarbige Bild zum Zuführen einkoppelbar ist und dann mittels Reflexion bis zum Volumenhologramm geführt wird, das die Umlenkung des mehrfarbigen Bildes und dadurch die Auskopplung aus dem Bildleiter bewirkt.

7. Projektionseinheit nach einem der obigen Ansprüche, wobei
das zugeführte mehrfarbige Bild eine dritte Wellenlänge aufweist und die erste Wellenlänge im blauen Wellenlängenbereich, die zweite Wellenlänge im grünen Wellenlängenbereich und die dritte Wellenlänge im roten Wellenlängenbereich liegt.

8. Projektionsvorrichtung mit einer Projektionseinheit (3) nach einem der obigen Ansprüche, wobei die Projektionsvorrichtung ein Bildmodul (2) aufweist, dass das mehrfarbige Bild dadurch erzeugt, dass ein erstes Farbteilbild mit einer ersten Wellenlänge und ein zweites Farbteilbild mit einer zweiten Wellenlänge erzeugt werden.

## Claims

1. Projection unit (3) which images a fed multicolored image having a first and a second wavelength into an exit pupil (6) such that an observer can perceive said image as a virtual image when the observer's eye (A) is positioned in the exit pupil (6) and the observer looks at the projection unit (3) at a predetermined viewing angle (α₁),
wherein the projection unit (3) has a volume hologram, which deflects the multicolored image into the exit pupil (6) for imaging purposes,
**characterized in that**
the volume hologram has a volume grating introduced by exposure for each wavelength of the color sub-images, said volume grating having a respective deflection efficiency profile which is dependent on the viewing angle and which is maximal for the predetermined viewing angle (α₁), and
**in that** the deflection efficiency profiles for a predetermined angular range around the predetermined viewing angle (α₁) are set to be equal by virtue of the fact that,
for each of the volume gratings introduced by exposure, the number of interference maxima introduced by exposure is the same and
the refractive index modulation introduced by exposure for the corresponding wavelength is the same for the volume gratings introduced by exposure.

2. Projection unit according to Claim 1,
wherein each volume grating is formed in a separate layer (11).

3. Projection unit according to Claim 2, wherein the thickness of the layers is chosen such that the ratio of the layer thicknesses corresponds to the ratio of the wavelengths for which the volume gratings are designed.

4. Projection unit according to any of the preceding claims, wherein
the volume gratings are configured as reflective volume gratings.

5. Projection unit according to any of the preceding claims, wherein
the volume hologram is embedded in a transparent carrier (4).

6. Projection unit according to any of the preceding claims, wherein
the projection unit comprises an image waveguide (4), into which the multicolored image is couplable for feeding purposes and is then guided by means of reflection as far as the volume hologram, which causes the deflection of the multicolored image and hence the output coupling from the image waveguide.

7. Projection unit according to any of the preceding claims, wherein
the fed multicolored image has a third wavelength, and the first wavelength lies in the blue wavelength range, the second wavelength lies in the green wavelength range, and the third wavelength lies in the red wavelength range.

8. Projection device comprising a projection unit (3) according to any of the preceding claims,
wherein the projection device comprises an image module (2), which generates the multicolored image by generating a first color sub-image having a first wavelength and a second color sub-image having a second wavelength.

## Revendications

1. Unité de projection (3) qui forme une image multicolore à une première et une deuxième longueur d'onde dans une pupille de sortie (6) de sorte qu'un observateur puisse la percevoir sous la forme d'une image virtuelle lorsque son œil (a) est positionné dans la pupille de sortie (6) et qu'il regarde l'unité de projection (3) sous un angle d'observation prédéfini (α₁),
dans laquelle l'unité de projection (3) présente un hologramme de volume, qui dévie l'image multicolore, pour l'imagerie, dans la pupille de sortie (6),
**caractérisée en ce que**
l'hologramme de volume présente, pour chaque longueur d'onde des images partielles en couleur, un réseau volumique exposé, qui présente dans chaque cas une courbe d'efficacité de déviation dépendant de l'angle d'observation et qui est maximale pour l'angle d'observation prédéfini (α₁), et
**en ce que** les courbes d'efficacité de déviation, pour une plage angulaire prédéfinie autour de l'angle d'observation prédéfini (α₁), sont réglées de manière à être identiques grâce au fait que
pour chacun des réseaux volumiques exposés, le nombre de maxima d'interférence exposés est identique et
la modulation d'indice de réfraction exposée pour la longueur d'onde correspondante est la même dans les réseaux volumiques exposés.

2. Unité de projection selon la revendication 1,
dans laquelle chaque réseau volumique est formé dans une couche séparée (11).

3. Unité de projection selon la revendication 2, dans laquelle l'épaisseur des couches est choisie de telle sorte que le rapport des épaisseurs de couche corresponde au rapport des longueurs d'onde pour lesquelles les réseaux volumiques sont conçus.

4. Unité de projection selon l'une quelconque des revendications précédentes, dans laquelle
les réseaux volumiques se présentent sous la forme de réseaux volumiques de réflexion.

5. Unité de projection selon l'une quelconque des revendications précédentes, dans laquelle
l'hologramme de volume est incorporé dans un support transparent (4).

6. Unité de projection selon l'une quelconque des revendications précédentes, dans laquelle
l'unité de projection présente un guide d'image (4) dans lequel l'image multicolore peut être injectée pour être acheminée et est ensuite guidée par réflexion jusqu'à l'hologramme de volume, qui provoque la déviation de l'image multicolore et par conséquent, son extraction hors du guide d'image.

7. Unité de projection selon l'une quelconque des revendications précédentes, dans laquelle
l'image multicolore fournie possède une troisième longueur d'onde et la première longueur d'onde se situe dans la gamme de longueurs d'onde bleue, la deuxième longueur d'onde se situe dans la gamme de longueurs d'onde verte et la troisième longueur d'onde se situe dans la gamme de longueurs d'onde rouge.

8. Dispositif de projection comprenant une unité de projection (3) selon l'une quelconque des revendications précédentes,
le dispositif de projection comprenant un module d'image (2) qui génère l'image multicolore en générant une première image partielle en couleur à une première longueur d'onde et une deuxième image partielle en couleur à une deuxième longueur d'onde.
